(19) Europäisches Patentamt
European Patent Office
Office européen des brevets

(11) **EP 2 628 657 B1**

(12) **EUROPÄISCHE PATENTSCHRIFT**

(45) Veröffentlichungstag und Bekanntmachung des Hinweises auf die Patenterteilung:
**24.06.2020  Patentblatt 2020/26**

(51) Int Cl.:
**B62D 3/12** *(2006.01)*          **F16H 55/28** *(2006.01)*

(21) Anmeldenummer: **13000751.1**

(22) Anmeldetag: **14.02.2013**

(54) **Druckstück mit thermischem Ausgleichselement**

Pressure piece with thermal compensation element

Pièce de pression dotée d'un élément d'équilibrage thermique

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.02.2012  DE 102012003042**

(43) Veröffentlichungstag der Anmeldung:
**21.08.2013  Patentblatt 2013/34**

(73) Patentinhaber:
• **thyssenkrupp Presta AG**
**9492 Eschen (LI)**
• **thyssenkrupp AG**
**45143 Essen (DE)**

(72) Erfinder:
• **Steck, Philippe**
**3123 Belp (CH)**
• **Werner, Sebastian**
**81669 München (DE)**

(74) Vertreter: **Lenzing Gerber Stute PartG von Patentanwälten m.b.B. Bahnstraße 9 40212 Düsseldorf (DE)**

(56) Entgegenhaltungen:
DE-A1-102004 053 462     US-A1- 2010 024 583

## Beschreibung

Die vorliegende Erfindung betrifft eine Zahnstangenlenkung nach dem Oberbegriff des unabhängigen Anspruchs 1.

Üblicherweise werden die vorstehend genannten Zahnstangenlenkungen in Kraftfahrzeugen eingesetzt. Eben solche Zahnstangenlenkungen, bei denen ein über ein Lenkrad und eine Lenkwelle betätigtes Ritzel mit einem Zahnsegment einer linear beweglichen Zahnstange zur Einstellung des Lenkwinkels von gelenkten Rädern eines Fahrzeugs kämmt, sind seit langem bekannt. Im Betrieb sollen das Ritzel und die Zahnstange spielfrei in Eingriff miteinander stehen.

Der spielfreie Eingriff wird üblicherweise über ein Druckstück bewirkt, dass von der dem Ritzel gegenüber liegenden Seite her die Zahnstange gegen das Ritzel drängt. Das Druckstück ist mittels einer Feder vorgespannt und kann gegen den Druck der Feder einen gewissen Hub ausführen, der im Bereich von 0,01 bis zu 0,6 Millimeter liegt. Die Einstellung der Vorspannung und des Hubs erfolgt über eine Stellschraube, die mit einem Gewinde in dem Gehäuse der Lenkung axial verstellbar ist.

Ein immer wieder auftretender Nachteil ist indes ein Axialspiel des Druckstücks, das unterschiedlichen Temperaturen nicht präzise angepasst werden kann. Dadurch kann die Zahnstange nicht präzise gegen das Ritzel gedrängt werden.

Aus dem Dokument JP 10217985 A ist eine Zahnstangenlenkung mit einem Gehäuse, in dem eine Zahnstange verschieblich gelagert ist, bekannt. In dem Gehäuse ist eine Druckstückbohrung vorgesehen, die quer zu der Zahnstange verläuft und in der ein Druckstück angeordnet ist, das mittels einer Stellschraube gegen die Zahnstange gedrängt wird. Die Zahnstangenlenkung weist ein hülsenförmiges Dämpfungsmittel mit einer Schulter auf, wobei die Schulter zwischen einer Stellschraube und dem Druckstück angeordnet ist, und wobei das Druckstück so bemessen ist, dass ein Spalt zwischen dem Dämpfungsmittel und dem Druckstück vorliegt. Der Spalt definiert die Bewegungsfreiheit des Druckstücks in axialer Richtung. Durch die dämpfenden Eigenschaften des Dämpfungsmittels wird das Entstehen von unerwünschten Geräuschen beim Anschlagen des Druckstücks auf die Stellschraube verhindert. Das Dämpfungsmittel besteht aus Kunstharz mit einem hohen Wärmeausdehnungskoeffizient, wobei der Wärmeausdehnungskoeffizient größer ist als der des Gehäuses. Um eine Geräuschreduzierung unabhängig von der Temperatur zu erreichen, ist die äußere Struktur der Hülse mit konkaven Einschnitten versehen, so dass der Spalt klein gehalten werden kann. Ziel dieser Anordnung ist es, insbesondere die Geräuschentstehung durch das Radialspiel zu minimieren, wobei die Schulter der Hülse den Anschlag in axialer Richtung zusätzlich dämpft. Eine thermische Kompensation mit dem Ziel eines in bestimmter Weise temperaturabhängigen Axialspiels ist nicht offenbart. Es ist auch nicht beschrieben, dass das Axialspiel durch ein ringförmiges thermisches Ausgleichselement angepasst wird.

Das Dokument US 6,041,885 offenbart ein thermisches Ausgleichselement, welches als geschlossenes Gleitlager eine Zahnstange in einem Gehäuse lagert. Ein Zusammenhang mit dem Druckstückspiel wird in diesem Dokument nicht dargestellt. DE 10 2004 053462 A1 offenbart eine Zahnstangenlenkung für ein Kraftfahrzeug nach dem Oberbegriff des Anspruchs 1. Es ist deshalb eine Aufgabe der vorliegenden Erfindung die eingangs genannte Zahnstangenlenkung zu verbessern und eine Möglichkeit für einen konstanten Eingriff der Zahnstange mit dem Ritzel zu gewährleisten. Eine Vorrichtung zur Lösung dieser Aufgabe weist die Merkmale des Anspruchs 1 auf.

Danach wird für ein Kraftfahrzeug, mit einem Gehäuse, in dem eine Zahnstange verschieblich gelagert ist, wobei in dem Gehäuse eine Bohrung vorgesehen ist, die quer zu der Zahnstange verläuft und ein in der Bohrung angeordnetes Druckstück, das mittels einer Stellschraube gegen die Zahnstange gedrängt wird, wobei in der Bohrung ein thermisches Ausgleichselement zum Ausgleich eines Axialspiels des Druckstücks angeordnet ist, wobei das Axialspiel im Vergleich zu einer vorbestimmten Temperatur, beispielsweise Raumtemperatur, ein erhöhtes Spiel bei niedrigeren Temperaturen als der vorbestimmten Temperatur und ein geringeres Spiel bei höheren Temperaturen als der vorbestimmten Temperatur vorgesehen sein. Je nach Einsatzbereich der Zahnstange bzw. des Kraftfahrzeugs können unterschiedliche Überkompensationswerte notwendig werden, damit unterschiedliche Spiele anstehen. Insbesondere ist die Überkompensation für unterschiedliches Spiel ein und derselben Zahnstange bei unterschiedlichen Temperaturen vorgesehen, weshalb der Spielausgleich nicht exakt proportional zu einer Ausdehnung der umliegenden Bauteile erfolgt.

Das Ausgleichselement soll die Einhaltung von bestimmten Axialspielwerten gewährleisten, wenn die Zahnstangenlenkung thermisch unterschiedlichen Bedingungen ausgesetzt ist. Das Ausgleichselement kann also einer thermischen Verformung des Druckstücks entgegenwirken.

Die erfinderische Lösung ist auch grundsätzlich auf Wellen- oder Spindelanordnungen einsetzbar, bei denen ebenfalls ein Druckstück auf die Welle bzw. die Spindel gedrückt wird. Nach einer weiteren bevorzugten Ausbildung der Erfindung kann vorgesehen sein, dass das Ausgleichselement derart bemessen ist, dass bei unterschiedlichen Temperaturen verschiedene Spielwerte vorgesehen sind. Die Überkompensation kann unterschiedlich ausgestaltet sein, weshalb der Ausgleich größer oder kleiner sein kann, wobei dabei darauf zu achten ist, dass der Ausgleich in jedem Fall größer als das erforderliche Spiel ist.

Nach einer bevorzugten Ausführung der Erfindung kann mit dem Ausgleichselement das eingestellte Axialspiel des Druckstücks über einen spezifischen Temperaturbereich im Wesentlichen konstant sein. Das Ausgleichselement kann somit ein einwandfreies Funktionieren des Druckstücks gewährleisten, wodurch insbesondere auch der Kontakt zwischen der Zahnstange und dem Ritzel auf einem gleichbleibenden Niveau gehalten werden kann.

Weiterhin ist vorteilhaft vorgesehen, wenn eine Abmessung des Ausgleichselements wenigstens abhängig von dem Druckstück und der Bohrung ist, insbesondere die Abmessungen der Bauteile korrelieren. Ein nicht unwesentlicher Bestandteil der Erfindung betrifft die Abmessungen der einzelnen Bauteile der Anordnung, die für die Konstanz des Axialspiels aufeinander abgestimmt sein sollten. Es hat sich nämlich gezeigt, dass bei beliebiger Dimensionierung der Bauteile das Spiel ausgeprägter ist, als wenn bestimmte Verhältnisse der einzelnen Bauteile berücksichtigt werden.

Gemäß einer bevorzugten Weiterbildung der Erfindung kann deshalb vorgesehen sein, dass eine Höhe des Ausgleichselements abhängig von einer Höhe des Druckstücks ist. Insbesondere die beiden in der Bohrung angeordneten Bauteile haben einen Einfluss auf die Konstanz des Spiels, weshalb die Abmessungen bei einer thermischen Heterogenität entscheidend für das eingestellte Spiel sein können. Ebenso kann aber auch ein Durchmesser Einfluss ausüben.

Eine weitere Ausführungsform kann vorsehen, dass die Korrelation der Bauteile wenigstens abhängig von einem Materialwert, insbesondere einem Temperaturausdehnungskoeffizienten, des jeweiligen Bauteils ist. Die Zahnstangenlenkung wird unterschiedlichen Temperaturen ausgesetzt, wodurch sich die Bauteile verformen können. Hierüber gibt der Temperaturausdehnungskoeffizient Auskunft, wie groß beispielsweise eine Längenänderung für ein Material ist. Bei der Zahnstangenlenkung werden bei unterschiedlichen Bauteilen auch unterschiedliche Materialen eingesetzt, weshalb diese sich auch unterschiedlich stark ausdehnen können. Mit dem Ausgleichselement soll aber dieser unterschiedlich starken Verformung entgegengewirkt werden, vorzugsweise diese durch das Ausgleichselement kompensiert werden.

Gemäß einer besonders bevorzugten Ausführungsform der Erfindung kann die Höhe des Ausgleichselements nach der Formel

$$L_{Kst} = \frac{L_{Dst} \; \alpha_{Dst} - \alpha_{Alu}}{\left( \alpha_{Alu} - \alpha_{Kst} \right)}$$

berechnet sein, wobei $L_{Kst}$ die Höhe des Ausgleichselements, $L_{Dst}$ die Höhe des Druckstücks, $\alpha_{Alu}$ der Temperaturausdehnungskoeffizient des Gehäuses, $\alpha_{Dst}$ der Temperaturausdehnungskoeffizient des Druckstücks und $\alpha_{Kst}$ der Temperaturausdehnungskoeffizient des Ausgleichselements ist. Es ist durch diese Formel leicht ersichtlich, dass die Höhe des Ausgleichselemente direkt abhängig ist von den Koeffizienten $\alpha$ der anderen Bauteile. Damit hat man gegenüber dem Stand der Technik den Vorteil, die Größe des Ausgleichselements genau in Abhängigkeit der anderen Bauteile zu berechnen. Andererseits kann man mit dieser Formel die Bauteile aneinander anpassen.

Weiterhin kann vorgesehen sein, wenn eine Länge einer Druckstückführung im Wesentlichen die Summe der Höhe des Druckstücks und der Höhe des Ausgleichselements ist. Da die Höhe des Ausgleichselements im Wesentlichen von der Höhe des Druckstücks abhängen kann, kann auch die Länge der Druckstückführung variieren.

Auch kann vorgesehen sein, dass das Ausgleichselement vorzugsweise zwischen dem Druckstück und der Stellschraube angeordnet ist. Das Druckstück ist für gewöhnlich an einem mit der Welle oder der Spindel in Kontakt tretenden Ende spezifisch ausgeführt. So kann beispielsweise das Druckstück an diesem Ende eine Rundung entsprechend der Welle aufweisen. Deshalb ist es vorteilhaft, wenn das Ausgleichselement an einer Stelle in der Bohrung vorgesehen ist, von der der Ausgleich besonders gut auf die anderen Bauteile wirken kann.

Weitere vorteilhafte Ausgestaltungen der vorliegenden Erfindung sind Inhalt der Unteransprüche.

Ein bevorzugtes Ausführungsbeispiel der Erfindung wird nachfolgend anhand der Zeichnung näher erläutert. In dieser zeigen:

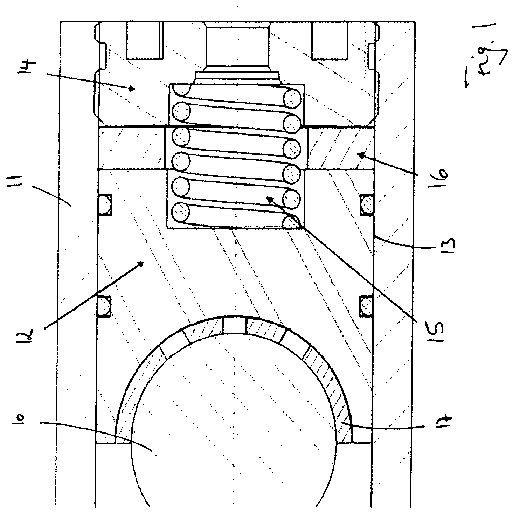

Fig. 1 eine Schnittansicht einer erfindungsgemäßen Einrichtung.

In der Fig. 1 ist ein Bereich einer Druckstückbohrung gezeigt, die in einer Zahnstangenlenkung angeordnet ist. Ebenso kann der dargestellte Bereich auch schlicht Teil einer Wellen- bzw. Spindelanordnung sein. Die Zahnstangenlenkung weist eine Zahnstange 10 auf, die mit einem nicht dargestellten Ritzel kämmt und in einem Gehäuse 11 angeordnet ist. Damit die Zahnstange 10 in dem dargestellten Gehäuse 11 spielfrei drehen kann bzw. präzise mit dem Ritzel in Eingriff steht, ist ein Druckstück 12 vorgesehen, das gegen die Zahnstange 10 gedrängt ist. Hierfür ist das Druckstück 12 quer zu einer Axialrichtung der Zahnstange 10 positioniert, wodurch in radialer Richtung der Zahnstange 10 ein gewisser Spielwert einstellbar ist.

Das Druckstück 12 ist in einer Bohrung 13 angeordnet, die einerseits in einer Führung für die Zahnstange 10 endet und andererseits ein offenes Ende aufweist, durch das zumindest das Druckstück 12 in die Bohrung 13 einführbar ist. Zusätzlich wird das Druckstück in der Bohrung 13 mit einer Stellschraube 14 gesichert. Die Sicherung gilt einerseits der tatsächlichen Sicherung, damit das Druckstück 12 nicht ungewollt aus der Bohrung 13 herausfallen kann. Andererseits dient die Sicherung auch der Einstellung eines Axialspielwerts des Druckstücks 12, wodurch das radiale Spiel der Zahnstange 10 spezifiziert wird. Weiterhin ist eine Feder 15 vorgesehen, durch die das Druckstück 10 gegen die Stellschraube 14 abgestützt ist.

Eine Oberfläche des Druckstücks 12, die zur Zahnstange 10 gerichtet ist, weist eine im Wesentlichen 180°-Krümmung auf. Das Druckstück 12 umschließt die Zahnstange 10 zumindest zum Teil, wobei zusätzlich ein Zwischenglied 17 zwischen der Zahnstange 10 und dem Druckstück 12 vorgesehen sein kann, wie es in Fig. 1 angedeutet ist.

Weiterhin ist ein thermisches Ausgleichselement 16 vorgesehen, das zwischen dem Druckstück 12 und der Stellschraube 14 angeordnet ist. Das Ausgleichselement 16 weist eine Durchbrechung auf, durch die die Feder 15 hindurch tritt. Das Ausgleichselement 16 ist als eine Ringscheibe ausgebildet, wobei in alternativen Ausführungsformen, wenn beispielsweise die Spindelanordnung keine Feder aufweist, das Ausgleichselement 16 auch in Form einer Scheibe ausgebildet sein kann.

Eine Höhe $L_{Kst}$ des Ausgleichelements ist nach der Formel

$$(F1) \quad L_{Kst} = \frac{L_{Dst}(\alpha_{Dst} - \alpha_{Alu})}{(\alpha_{Alu} - \alpha_{Kst})}$$

berechnet. Darin bedeutet $L_{Kst}$ die Höhe des Ausgleichselements 16, $L_{Dst}$ die Höhe des Druckstücks 12, $\alpha_{Alu}$ der Temperaturausdehnungskoeffizient des Gehäuses 11, $\alpha_{Dst}$ der Temperaturausdehnungskoeffizient des Druckstücks 12 und $\alpha_{Kst}$ der Temperaturausdehnungskoeffizient des Ausgleichselements 16.

Mit der Formel (F1) kann je nach Koeffizient $\alpha$ des jeweiligen Bauteils die Höhe des Ausgleichselements 16 berechnet werden, wobei zusätzlich auch die Höhe des Druckstücks 12 bekannt sein muss. Insofern ist die Höhe des Ausgleichselements 16 auch abhängig von der Höhe des Druckstücks 12 bzw. wird an diese angepasst. Aufgrund der Abhängigkeit der Höhe des Ausgleichselements von den Koeffizienten der anderen Bauteile können bei unterschiedlichen Materialen und gleicher Druckstückhöhe eine andere Ausgleichselementhöhe berechnet werden.

Ferner ist auch eine Überkompensation möglich. Das bedeutet, dass ein Spiel in Abhängigkeit der Temperatur erzwungen werden kann. Durch ein zu langes oder zu kurzes Ausgleichselement 16 kann ein Wert auf 0,02 mm bei Raumtemperatur eingestellt werden, wodurch ein erhöhtes Spiel bei niedrigen Temperaturen und ein verkleinertes Spiel bei warmen Temperaturen erzielt werden kann. Ein erhöhtes Spiel bei niedrigen Temperaturen kann einem Klemmen oder allgemein der Schwergängigkeit der Lenkung vorbeugen. Somit kann bei unterschiedlichen Temperaturen ein unterschiedliches Spiel vorgesehen sein, was die Anwendungsmöglichkeiten des Ausgleichselements 16 weiter erhöht, da bei niedrigen Temperaturen bewegliche Bauteile für gewöhnlich schwergängiger sind, als bei höheren Temperaturen. Dieses kann durch eine Variation der Länge des Ausgleichselements 16 zur rechnerischen Balance erreicht werden, weshalb der oben erwähnte Wert von 0,02 mm nicht starr festgelegt werden muss. Es können sich in Abhängigkeit der Größe des Ausgleichselements 16 auch andere Werte ergeben.

Es ist zu beachten, das die Formel F1, mit der die Größe des Ausgleichselements 16 bemessen wird, bei einer Überkompensation mit einem Zusatzwert beaufschlagt wird, damit die Variation in dem Spiel erreicht werden kann. Der Zusatzwert ist, wie bereits erwähnt, bei einer vorbestimmten Temperatur des Ausgleichselements 16 und der anderen Bauteile 11, 12 zu bestimmen. Gewöhnlich kann hier die Raumtemperatur, beispielsweise 20° C, genommen werden. Andere Temperaturen sind jedoch auch denkbar.

Nachstehend werden zwei Berechnungen beschrieben, bei denen bei zumindest ähnlichen Temperaturausdehnungskoeffizienten unterschiedliche Bauteilhöhen berechnet wurden.

Bei der ersten Berechnung ist das Gehäuse 11 aus Aluminium gefertigt, weshalb der Koeffizient $\alpha_{Alu}$ des Gehäuses 24 ist. Das Druckstück ist aus Polyetheretherketon (PEEK) gebildet, das einen Temperaturausdehnungskoeffizienten $\alpha_{Dst}$ 17 aufweist. Das thermische Ausgleichselement selbst ist aus Zink gefertigt, welches einen Temperaturausdehnungskoeffizienten $\alpha_{Kst}$ 26 aufweist.

Nach der Berechnung mit der Formel (F1) erhält man bei einer angenommen Druckstückhöhe von 30 mm eine Ausgleichselementhöhe von 105 mm. Die notwendige Länge der Druckstückführung wäre somit mit 135 mm anzusetzen.

Bei einem anderen Berechnungsbeispiel, bei den das Druckstück 12 aus Zink gefertigt ist und das Ausgleichselement aus Stahl, ergeben sich niedrigere Abmessungen. Der Temperaturausdehnungskoeffizienten $\alpha_{Dst}$ ist bei Zink 26 und bei Stahl $\alpha_{Kst}$ 12. Somit ergibt sich eine Höhe des Ausgleichselements 16 von nur 5 mm, bei gleicher Druckstückhöhe von 30 mm wie im ersten Berechnungsbeispiel.

Durch die verschiedenen Temperaturausdehnungskoeffizienten der einzelnen Bauteile bleibt das eingestellte Spiel des Druckstücks 12 über den gesamten Temperaturbereich, den die Zahnstangenlenkung ausgesetzt sein kann, annähernd konstant. Je nach Gehäuseabmessung ist ein entsprechendes Material für das Ausgleichselement 16 zu wählen, da, wie oben gezeigt, ganz unterschiedliche Höhen erforderlich sein können, wenn die Höhe des Druckstücks 12 vorgegeben ist.

Das thermische Ausgleichselement 16 kann somit aus unterschiedlichen Materialen gebildet sein, wobei diese in Abhängigkeit der Bauteilhöhe und des Materials des Druckstücks zu wählen ist. Neben Zink oder Stahl, wie in den Beispielberechnungen gewählt, können auch thermoplastische Kunststoffe oder andere Metalle gewählt werden, je nachdem, welches der Materialen für die gewünschte Länge des Ausgleichselements 16 zweckmäßig ist. Es kann aber auch das Material des Druckstücks 12 an das Material des Ausgleichselements 16 angepasst werden, je nachdem wie der Temperaturausdehnungskoeffizient ist.

Zusammenfassend betrifft die Erfindung deshalb eine Zahnstangenlenkung bzw. eine Einrichtung zum Ausgleich eines Radialspiels einer Wellen- bzw. Spindelanordnung für Lenkungen in Kraftfahrzeugen. Zum Ausgleich thermischer Verformungen wird ein Ausgleichselement einem Druckstück zugeordnet, welches mittels einer Stellschraube gegen die Zahnstange oder Welle bzw. Spindel gedrängt ist. Das Ausgleichselement ist dabei so dimensioniert, dass sich das Druckstückspiel mit der Temperatur in vorbestimmter Weise ändert.

**Patentansprüche**

1. Zahnstangenlenkung für ein Kraftfahrzeug, mit einem Gehäuse (11), in dem eine Zahnstange verschieblich gelagert ist, wobei in dem Gehäuse (11) eine Bohrung (13) vorgesehen ist, die quer zu der Zahnstange (10) verläuft und ein in der Bohrung angeordnetes Druckstück (12), das mittels einer Stellschraube (14) gegen die Zahnstange (10) gedrängt wird, wobei in der Bohrung (13) zwischen dem Druckstück (12) und der Stellschraube (14) ein ringförmiges thermisches Ausgleichselement (16) zum Ausgleich eines Axialspiels des Druckstücks (12) angeordnet ist, **dadurch gekennzeichnet, dass** das Ausgleichselement (16) derart bemessen ist, dass sich bei unterschiedlichen Temperaturen verschiedene Werte für das Axialspiel einstellen, wobei sich ausgehend von einer vorbestimmten Temperatur ein erhöhtes Axialspiel bei niedrigeren Temperaturen als der vorbestimmten Temperatur und ein verringertes Axialspiel bei höheren Temperaturen als der vorbestimmten Temperatur ergibt.

2. Zahnstangenlenkung nach Anspruch 1, **dadurch gekennzeichnet,** dass mit dem Ausgleichselement (16) das eingestellte Axialspiel des Druckstücks (12) über einen spezifischen Temperaturbereich im Wesentlichen konstant ist.

3. Zahnstangenlenkung nach Anspruch 1 oder 2, **dadurch gekennzeichnet, dass** eine Abmessung des Ausgleichselements (16) wenigstens abhängig von dem Druckstück (12) und der Bohrung (13) ist, insbesondere die Abmessungen der Bauteile (12, 13, 16) korrelieren.

4. Zahnstangenlenkung nach einem der vorhergehenden Ansprüche, **dadurch gekennzeichnet, dass** eine Höhe des Ausgleichselements (16) abhängig von einer Höhe des Druckstücks (12) ist.

5. Zahnstangenlenkung nach einem der vorhergehenden Ansprüche, **dadurch gekennzeichnet, dass** die Korrelation der Bauteile (12, 13, 16) wenigstens abhängig von einem Materialwert, insbesondere einem Temperaturausdehnungskoeffizienten, des jeweiligen Bauteils (12, 13, 16) ist.

6. Zahnstangenlenkung nach einem der vorhergehenden Ansprüche, **dadurch gekennzeichnet, dass** die Höhe des Ausgleichselements (16) nach der Formel

$$L_{Kst} = \frac{L_{Dst}}{\left(\alpha_{Alu} - \alpha_{Kst}\right)} \, \alpha_{Dst} - \alpha_{Alu}$$

berechnet ist, wobei $L_{Kst}$ die Höhe des Ausgleichselements (16) ist, $L_{Dst}$ die Höhe des Druckstücks (12) ist, $\alpha_{Alu}$ der Temperaturausdehnungskoeffizient des Gehäuses (11), $\alpha_{Dst}$ der Temperaturausdehnungskoeffizient des Druckstücks (12) und $\alpha_{Kst}$ der Temperaturausdehnungskoeffizient des Ausgleichselements (16) ist.

7. Zahnstangenlenkung nach einem der vorhergehenden Ansprüche, **dadurch gekennzeichnet, dass** eine Länge einer Druckstückführung im Wesentlichen die Summe der Höhe des Druckstücks (12) und der Höhe des Ausgleichselements (16) ist.

8. Zahnstangenlenkung nach wenigstens einem der vorhergehenden Ansprüche, **dadurch gekennzeichnet, dass** das Ausgleichselement (16) vorzugsweise zwischen dem Druckstück (12) und der Stellschraube (14) angeordnet ist.

**Claims**

1. Rack-and-pinion steering for a motor vehicle, with a housing (11), in which a rack is displaceably mounted, wherein in the housing (11) a borehole (13) is provided which runs transverse to the rack (10) and a pressure piece (12) arranged in the borehole, which is pushed against the rack (10) by means of an adjustment screw (14), wherein in the borehole (13) between the pressure piece (12) and the adjustment screw (14) a ring-shaped thermal compensation element (16) is arranged to compensate an axial clearance of the pressure piece (12), **characterised in that** the compensation element (16) is dimensioned such that in the case of different temperatures different values are set for the axial clearance, wherein, based on a predetermined temperature, an increased axial clearance results for lower temperatures than the predetermined temperature and a reduced axial clearance results for higher temperatures than the predetermined temperature.

**2.** Rack-and-pinion steering according to claim 1, **characterised in that** the set axial clearance of the pressure piece (12) is substantially constant over a specified temperature range using the compensation element (16).

**3.** Rack-and-pinion steering according to claim 1 or 2, **characterised in that** a dimension of the compensation element (16) is at least dependent on the pressure piece (12) and the borehole (13), in particular the dimensions of the structural parts (12, 13, 16) correlate.

**4.** Rack-and-pinion steering according to any one of the preceding claims, **characterised in that** a height of the compensation element (16) is dependent on a height of the pressure piece (12).

**5.** Rack-and-pinion steering according to any one of the preceding claims, **characterised in that** the correlation of the structural parts (12, 13, 16) is at least dependent on a material value, in particular a thermal expansion coefficient, of the respective structural part (12, 13, 16).

**6.** Rack-and-pinion steering according to any one of the preceding claims, **characterised in that** the height of the compensation element (16) is calculated according to the formula

$$L_{Kst} = \frac{L_{Dst}\, \alpha_{Dst} - \alpha_{Alu}}{\left(\alpha_{Alu} - \alpha_{Kst}\right)}$$

wherein $L_{Kst}$ is the height of the compensation element (16), Lost is the height of the pressure piece (12), $\alpha_{Alu}$ is the thermal expansion coefficient of the housing (11), $\alpha_{Dst}$ is the thermal expansion coefficient of the pressure piece (12) and $\alpha_{Kst}$ is the thermal expansion coefficient of the compensation element (16).

**7.** Rack-and-pinion steering according to any one of the preceding claims, **characterised in that** a length of a pressure piece guide is substantially the sum of the height of the pressure piece (12) and the height of the compensation element (16).

**8.** Rack-and-pinion steering according to any one of the preceding claims, **characterised in that** the compensation element (16) is preferably arranged between the pressure piece (12) and the adjustment screw (14).

**Revendications**

**1.** Système de direction à crémaillère pour un véhicule automobile, avec un boîtier (11) dans lequel est logée de manière coulissante une crémaillère, un perçage (13), s'étendant transversalement par rapport à la crémaillère (10), étant prévu dans le boîtier (11), et une pièce de pression (12) agencée dans le perçage étant poussée contre la crémaillère (10) au moyen d'une vis de pression (14), un élément de compensation thermique (16) annulaire, pour la compensation d'un jeu axial de la pièce de pression (12), étant agencé dans le perçage (13) entre la pièce de pression (12) et la vis de réglage (14), **caractérisé en ce que** l'élément de compensation (16) est dimensionné de manière à ce que, lors de températures différentes, plusieurs valeurs pour le jeu axial sont réglées, et il en résulte, à une température prédéterminée, un jeu axial accru lors d'une température plus basse que la température prédéterminée et un jeu axial réduit lors d'une température plus élevée que la température prédéterminée.

**2.** Système de direction à crémaillère selon la revendication 1, **caractérisé en ce qu'**avec l'élément de compensation (16) le jeu axial réglé de la pièce de pression (12) est essentiellement constant sur une gamme de température spécifique.

**3.** Système de direction à crémaillère selon la revendication 1 ou 2, **caractérisé en ce qu'**une dimension de l'élément de compensation (16) est au moins dépendante de la pièce de pression (12) et du perçage (13), notamment les dimensions des composants (12, 13, 16) sont corrélées.

**4.** Système de direction à crémaillère selon l'une des revendications précédentes, **caractérisé en ce qu'**une hauteur de l'élément de compensation (16) est dépendante d'une hauteur de la pièce de pression (12).

**5.** Système de direction à crémaillère selon l'une des revendications précédentes, **caractérisé en ce que** la corrélation des composants (12, 13, 16) est au moins dépendante d'une valeur matérielle, notamment d'un coefficient de dilatation thermique, du composant (12, 13, 16) respectif.

**6.** Système de direction à crémaillère selon l'une des revendications précédentes, **caractérisé en ce que** la hauteur de l'élément de compensation (16) est calculée selon la formule

$$L_{Kst} = \frac{L_{Dst}\left(\alpha_{Dst} - \alpha_{Alu}\right)}{\left(\alpha_{Alu} - \alpha_{Kst}\right)}$$

$L_{Kst}$ étant la hauteur de l'élément de compensation (16), $L_{Dst}$ étant la hauteur de la pièce de pression (12), $\alpha_{Alu}$ étant le coefficient de dilatation thermique

du boîtier (11), $\alpha_{Dst}$ étant le coefficient de dilatation thermique de la pièce de pression (12) et $\alpha_{Kst}$ étant le coefficient de dilatation thermique de l'élément de compensation (16).

7. Système de direction à crémaillère selon l'une des revendications précédentes, **caractérisé en ce qu'**une longueur d'un guidage de la pièce de pression correspond essentiellement à la somme de la hauteur de la pièce de pression (12) et de la hauteur de l'élément de compensation (16).

8. Système de direction à crémaillère selon l'une des revendications précédentes, **caractérisé en ce que** l'élément de compensation (16) est agencé de préférence entre la pièce de pression (12) et la vis de réglage (14).

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 10217985 A
- US 6041885 A

- DE 102004053462 A1